# EUROPÄISCHE PATENTANMELDUNG

(11) **EP 2 154 401 A2**
(43) Veröffentlichungstag der Anmeldung: **17.02.2010**
(21) Anmeldenummer: 09008591.1
(22) Anmeldetag: 01.07.2009
(51) Int. Cl.: F16L 9/12

(54) **Faserverstärktes Kunststoffrohr**

(30) Priorität: 17.07.2008 DE 102008033577
(71) Anmelder: Hobas Engineering GmbH, 9020 Klagenfurt (AT)
(72) Erfinder: Simoner, Thomas, 9063 Maria Saal (AT)
(74) Vertreter: Schweiger, Johannes

(57) **Zusammenfassung**

Die Erfindung betrifft ein glasfaserverstärktes Kunststoffrohr, dessen Rohrwand gebildet ist durch mindestens eine im Schleuder- und/oder Schleudergussverfahren hergestellt Schleuderschicht (9) und mindestens eine im Wickelverfahren hergestellte Wickelschicht (5) sowie ein Verfahren zur Herstellung eines faserverstärkten Kunststoffrohres mit den Schritten der Bildung einer Wickelschicht im Wickelverfahren und der Bildung einer Schleuderschicht im Schleuder- und/oder Schleudergussverfahren.

## Beschreibung

Die Erfindung betrifft ein faserverstärktes, insbesondere glasfaserverstärktes, Kunststoffrohr nach Anspruch 1 und ein Verfahren zur Herstellung eines faserverstärkten, insbesondere glasfaserverstärkten, Kunststoffrohrs nach Anspruch 13.

Faser-Kunststoff-Verbunde, insbesondere faserverstärkte Kunststoffe finden in einer Vielzahl von Anwendungsgebieten in Form von kurzfaserverstärkten, langfaserverstärkten oder endloslaserverstärkten Bauteilen Verwendung. Die Untergruppe der glasfaserverstärkten Kunststoffe (GFK) sind ein Verbund aus einem Kunststoff, wie beispielsweise Polyesterharz, Epoxidharz oder Polyamid, und Glasfasern. Er ist der am häufigsten eingesetzte langfaserverstärkte Kunststoff. Glasfaserverstärkte Kunststoffe sind ein kostengünstiger und dennoch sehr hochwertiger Faser-Kunststoff-Verbund. In mechanisch hochwertigen Anwendungen findet sich der glasfaserverstärkte Kunststoff ausschließlich in Form von Endlosfasern in Geweben, oder auch als Gelege- oder aus Rovings oder unidirektionalen Gewebe-Gelegen, die im Strangziehverfahren hergestellt werden.

Im Wickelverfahren hergestellte glasfaserverstärkte Kunststoffrohre werden in einem überwiegend kontinuierlichen Prozess von innen nach außen hergestellt, während im Schleuderverfahren hergestellte glasfaserverstärkte Kunststoffrohre in einem diskontinuierlichen Prozess von außen nach innen hergestellt werden. Beide Verfahren weisen Vor-und Nachteile auf und führen zu unterschiedlichen Eigenschaften der entsprechend hergestellten faserverstärkten Kunststoffrohre.

Es ist daher die Aufgabe der vorliegenden Erfindung, ein faserverstärktes, insbesondere glasfaserverstärktes, Kunststoffrohr vorzugeben, das verglichen mit bekannten faserverstärkten, insbesondere glasfaserverstärkten, Rohren verbesserte Eigenschaften aufweist, insbesondere hinsichtlich Dichtigkeit, Steifigkeit, Formstabilität sowie Abrasionsbeständigkeit.

Diese Aufgabe wird mit den Merkmalen der Ansprüche 1 und 13 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart gelten und in beliebiger Kombination beanspruchbar sein.

Grundidee der vorliegenden Erfindung ist es dabei, ein Rohr auf Basis der Wickel- und der Schleudertechnologie zu schaffen, um die diesbezüglich ermittelten Synergieeffekte zu nutzen.

Die Erkenntnis, durch Kombination der beiden als solche bekannten Verfahren die positiven Effekte aus beiden Verfahren in das Endprodukt zu übertragen, ist eine wesentliche Errungenschaft der vorliegenden Erfindung, zumal eine Kombination der beiden Technologien wegen der grundsätzlich unterschiedlichen Verfahrensabläufe (kontinuierlich/diskontinuierlich) und des unterschiedlichen Automatisationsgrades der beiden Verfahren, die den Fachmann von dem Kombinationsgedanken wegführen, nicht nahegelegt ist.

Indem die Rohrwand des faserverstärkten Kunststoffrohres durch mindestens eine im Schleuder- und/oder Schleudergussverfahren hergestellte Schleuderschicht und mindestens eine im Wickelverfahren hergestellte Wickelschicht gebildet ist, können gezielt und je nach Anwendungsfall in geeigneter Anordnung innerhalb der Rohrwand vorteilhafte Eigenschaften beider Fertigungsverfahren kombiniert werden, wobei auch eine gegenseitige Beeinflussung der vorteilhaften Eigenschaften möglich ist, was überraschenderweise zu Synergieeffekten führt.

In einer vorteilhaften Ausgestaltung der Erfindung ist die Wickelschicht in einem in radialer Richtung außen liegenden Außenbereich des Rohrs angeordnet, insbesondere als Außenschicht. Gewickelte Rohre haben als Eigenschaft hohe Materialfestigkeit, wobei eine gezielte Steuerung der Festigkeiten durch definierte Faserwickel und/oder Faserlängen möglich ist. Weiterhin weisen im Wickelverfahren hergestellte glasfaserverstärkte Kunststoffrohre ein höheres Langzeit-Biegemodul auf.

Mit Vorteil kann die Mittelschicht aus Harz und Fasern, insbesondere Glasfasern, gebildet sein, wobei die Fasern vorzugsweise aus einem Matten- oder Gelegeverbund bestehen. Die Harze sind aushärtbar, beispielsweise Polyesterharze.

In einer weiteren vorteilhaften Ausgestaltung der Erfindung sind die Fasern aus mehreren, insbesondere genau zwei, geordneten Gruppen mit jeweils im Wesentlichen parallel zueinander ausgerichteten Fasern gebildet. Hierdurch wird eine höhere Stabilität der Wickelschicht erreicht.

Besonders vorteilhaft ist es, wenn die Fasern jeder Gruppe zur Umfangsrichtung U des Rohres definiert ausgerichtet verlaufen. Hierdurch können die Festigkeiten des Kunststoffrohres gezielt gesteuert werden, wobei besonders vorteilhaft ist, wenn die Fasern der Gruppen in einem definierten Winkel zueinander angeordnet sind.

In einer vorteilhaften Ausführungsform der Erfindung sind die Fasern einer ersten Gruppe näherungsweise, insbesondere genau, in Umfangsrichtung U des Rohres verlaufend angeordnet und die Fasern einer zweiten Gruppe verlaufen quer, insbesondere in einem Winkel von 80° bis 100°, vorzugsweise in einem Winkel von 85° bis 95°, zu den Fasern der ersten Gruppe.

In einer alternativen, vorteilhaften Ausführungsform verlaufen die Fasern einer ersten Gruppe in einem Winkel von 40° bis 60° zur Umfangsrichtung U des Rohres und die Fasern einer zweiten Gruppe quer, insbesondere in einem Winkel von 80° bis 100°, vorzugsweise in einem Winkel von 85° bis 95°, zu den Fasern der ersten Gruppe.

Durch Verbindung der Schleuderschicht mit der Wickelschicht, insbesondere durch in der Schleuderschicht und der Wickelschicht enthaltenes Harz, wird ein homogenes Rohr mit einem fließenden Übergang zwischen Schleuderschicht und Wickelschicht erhalten. Vorzugsweise sind die Schleuderschicht und die Wickelschicht vernetzt.

Soweit die Schleuderschicht mindestens eine Schutzschicht, insbesondere aus in axialer Richtung verlaufenden Fasern, vorzugsweise Kurzfasern mit einer Maximallänge von 60 mm, umfasst, wobei die Schutzschicht vorzugsweise außen und/oder innen in Radialrichtung des Rohres angeordnet ist, kann eine hohe Dichtigkeit im Bereich der Schutzschicht bzw. Schleuderschicht erreicht werden. Hierdurch ergibt sich darüber hinaus eine Abrasionsbeständigkeit und Chemikalienbeständigkeit, die deutlich höher als bei gewickelten Rohren ist, so dass eine Anordnung der Schleuderschicht in einem in radialer Richtung innen liegenden Innenbereich des Rohres bevorzugt ist.

Mit Vorteil umfasst die Schleuderschicht mindestens eine, insbesondere unverstärkte, vorzugsweise faserfreie, Zwischenschicht, die benachbart zu mindestens einer Schutzschicht, vorzugsweise zwischen zwei Schutzschichten, angeordnet ist. Die Zwischenschicht kann dabei weitere Funktionen übernehmen, indem beispielsweise Füllstoffe mit bestimmten Eigenschaften in die Zwischenschicht eingebracht werden.

Soweit die Zwischenschicht einen, insbesondere irreversibel verformbaren, Zuschlagstoff zur Aufnahme von auf das Rohr einwirkenden Kräften, insbesondere Schlägen, enthält, kann das Rohr gegenüber einer Schlagbeanspruchung einen verbesserten Schutz bieten.

Eine besonders glatte Oberfläche im Rohrinneren kann erreicht werden, indem die Schleuderschicht eine in Radialrichtung des Rohres innen liegende Linerschicht aufweist.

Die Erfindung betrifft außerdem nur ein Verfahren zur Herstellung eines faserverstärkten, insbesondere glasfaserverstärkten, Kunststoffrohres, bei dem in einem, insbesondere ersten, Schritt eine Wickelschicht im Wickelverfahren gebildet wird und in einem, insbesondere zweiten, Schritt eine Schleuderschicht im Schleuder- und/oder Schleudergussverfahren gebildet wird.

Indem im ersten Schritt das Einbringen von Fasern in einen Zylinder sowie das Tränken der Fasern mit Harz erfolgt, kann die Wickelschicht als Außenschicht gefertigt werden und anschließend das Schleuderverfahren und/oder Schleudergussverfahren ausgeführt werden.

In einer vorteilhaften Ausführungsform des erfindungsgemäßen Verfahrens umfasst der zweite Schritt das Aufschleudern mindestens einer, insbesondere mindestens eine Schutzschicht und insbesondere eine der Schutzschicht benachbart angeordnete Zwischenschicht aufweisende, Schleuderschicht auf die Wickelschicht, mit Vorteil vom Rohrinneren her.

Weitere Vorteile und zweckmäßige Ausführungen der Erfindungen sind in den weiteren Ansprüchen, den Figuren, der Beschreibung und den Zeichnungen wiedergegeben.

Darin zeigen stark schematisiert:
- Figuren 1a, b, c: einen Schnitt durch eine Rohrwand von Ausführungsformen eines erfindungsgemäßen glasfaserverstärkten Rohres und
- Figuren 2a, b, c: eine schematische Darstellung von Gelegeverbunde der Wickelschicht.

In den Figuren sind entsprechende Bauteile mit identischen Bezugszeichen gekennzeichnet.

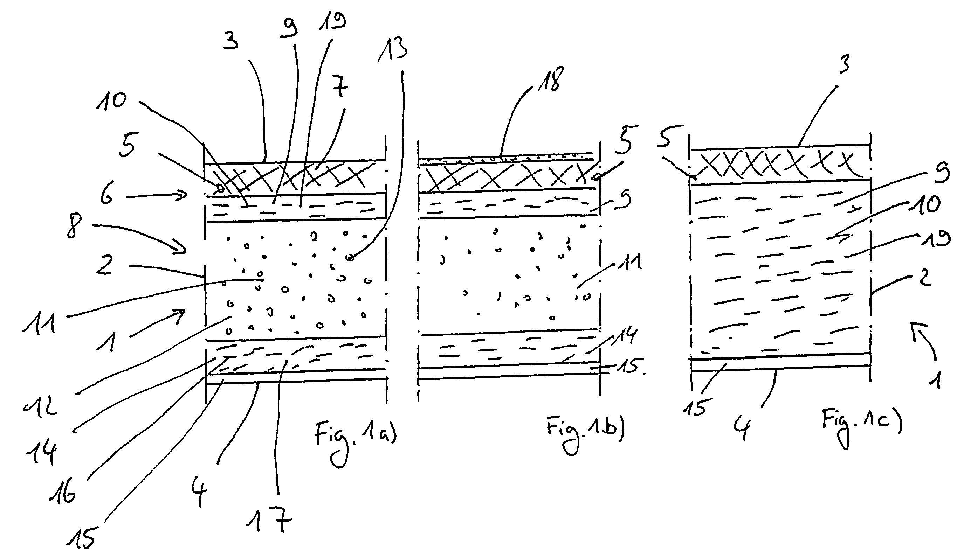

Figur 1a zeigt einen Querschnitt durch eine Rohrwand 2 eines glasfaserverstärkten Rohres 1 mit einer der Umgebung ausgesetzten Rohraußenseite 3 und einer Rohrinnenseite 4, die mit einem durch das Rohr 1 zu fördernden Medium, beispielsweise Abwasser, in Berührung kommt. Es ist lediglich ein Rohrabschnitt schematisch dargestellt, da die Rohre Längen von 6 Metern oder mehr aufweisen können. Durchmesser der Rohre 1 können zwischen 100mm bis mehrere Meter betragen. Entsprechend variiert auch die Dicke der Rohrwand 2.

Eine im Wickelverfahren hergestellte Wickelschicht 5 ist in einem radial außen liegenden Außenbereich 6 des Rohres 1 angeordnet und ist gebildet durch einen Gelege- oder Mattenverbund, der mit einem zu härtenden Harz 7 getränkt ist.

Im Schleuderverfahren wird eine Schleuderschicht 8 vom Rohrinneren her auf die Wickelschicht 5 aufgetragen. Die Schleuderschicht 8 besteht in der Ausführungsform gemäß Figur 1a und 1b aus einer Schutzschicht 9, die an die Wickelschicht 5 anschließt und im Außenbereich 6 angeordnet ist. Die Schutzschicht 9 weist kurze, überwiegend axial verlaufende Kurzfasern 10 auf. An die Schutzschicht 9 schließt radial innen eine Zwischenschicht 11 an, die aus Harz 12 und Füllstoffen 13, wie beispielsweise Schnittglas besteht. Die Zwischenschicht 11 ist mit Vorteil als unverstärkte Harzschicht ausgebildet.

An die Zwischenschicht 11 schließt eine weitere Schutzschicht 14 und an diese eine Linerschicht 15 an, die gleichzeitig die Rohrwand 2 nach innen an der Rohrinnenseite 4 abschließt.

Die Schutzschicht 14 ist wie die Schutzschicht 9, die Zwischenschicht 11 und die Linerschicht 15 im Schleuderverfahren gebildet und besteht aus Kurzfasern 16 und Harz 17.

Das GFK-Kunststoffrohr gemäß Figur 1b unterscheidet sich von dem GFK-Kunststoffrohr gemäß Figur 1a durch eine Außenbeschichtung 18, bestehend aus Harz und Füllstoffen. Diese Schicht wird von der Wickelschicht 5 im Schleuderverfahren eingebracht. Alternativ besteht die Möglichkeit, die Außenbeschichtung 18 nachträglich auf das fertige Rohr 1 aufzustreichen.

Das GFK-Rohr gemäß Figur 1c unterscheidet sich von dem GFK-Rohr gemäß Figur 1a dadurch, dass keine Zwischenschicht 11 vorgesehen ist, so dass die gesamte Rohrwand 2 - abgesehen von der Linderschicht 15 - faserverstärkt ausgebildet ist.

Die Linerschicht 15 trägt zu einer glatten Oberfläche der Rohrinnenseite 4 bei, kann aber auch für bestimmte Anwendungen weggelassen werden.

Die in der Schleuderschicht 8 enthaltenen Schichten, nämlich Schutzschichten 10 und/oder 14, gegebenenfalls Zwischenschicht 11 und gegebenenfalls Linerschicht 15 können in einem kontinuierlichen Prozess im Schleuderverfahren aufgetragen werden.

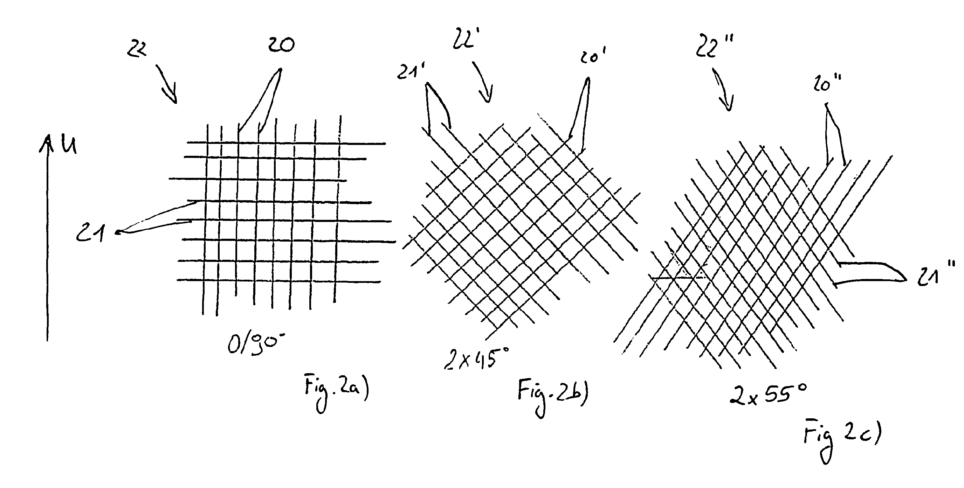

In Figur 2a ist die Faserausrichtung von Fasergruppen 20, 21 der Wickelschicht 5 dargestellt, die mit Vorteil als Mattenverbund oder Gelegeverbund 22 vorliegen. Alternative Matten- oder Gelegeverbunde 22', 22" sind in Figuren 2b und 2c dargestellt, wobei die Umfangsrichtung U des Rohres 1 durch einen Pfeil dargestellt ist.

Die Fasern jeder Fasergruppe 20, 21, 20', 21', 20", 21 " sind jeweils im Wesentlichen parallel zueinander und möglichst mit identischem Abstand zueinander angeordnet. Die Fasern sind als Langfasern ausgebildet.

Bei der Ausführungsform gemäß Figur 2a verlaufen die Fasern der Fasergruppe 20 in Umfangsrichtung und die Fasern der Gruppe 21 quer zur Umfangsrichtung, das heißt im Winkel von 90° zu den Fasern der Fasergruppe 20.

Bei der Ausführungsform gemäß Figur 2b verlaufen die Fasern der Fasergruppe 20' schräg zur Umfangsrichtung U, bei der konkreten Ausführungsform gemäß Figur 2b im Winkel von 45° zur Umfangsrichtung U. Die Fasern der Fasergruppe 2 1 ' verlaufen ebenfalls schräg zur Umfangsrichtung U, im Fall der Ausführungsform gemäß Figur 2b konkret in einem Winkel von 45° zur Umfangsrichtung U und gleichzeitig in einem Winkel von 90° zu den Fasern der Fasergruppe 20'.

Die Fasern der Fasergruppe 20" verlaufen in einem Winkel von 35° zur Umfangsrichtung U, das heißt in einem Winkel von 55° zur Axialrichtung des Rohres 1. Die Fasern der Fasergruppe 21 " verlaufen ebenfalls in einem Winkel von 35° zur Umfangsrichtung U, das heißt in einem Winkel von 55° zur Axialrichtung des Rohres. Entsprechend sind die Fasern der Fasergruppe 20" zu den Fasern der Fasergruppe 21*''* in einem Winkel von 70° bzw. 110° zueinander angeordnet.

### Bezugszeichenliste

- 1: Rohr
- 2: Rohrwand
- 3: Rohraußenseiten
- 4: Rohrinnenseiten
- 5: Wickelschicht
- 6: Außenbereich
- 7: Harz
- 8: Schleuderschicht
- 9: Schutzschicht
- 10: Kurzfasern
- 11: Zwischenschicht
- 12: Harz
- 13: Füllstoff
- 14: Schutzschicht
- 15: Linerschicht
- 16: Kurzfasern
- 17: Harz
- 18: Außenbeschichtung
- 19: Harz
- 20, 20', 20": Fasergruppe
- 21, 21', 21'': Fasergruppe
- 22, 22', 22'': Matten-/Gelegeverbund

## Patentansprüche

1. Faserverstärktes Kunststoffrohr (1), dessen Rohrwand (2) gebildet ist durch:
- mindestens eine im Schleuder- und/oder Schleudergussverfahren hergestellte Schleuderschicht (8) und
- mindestens eine im Wickelverfahren hergestellte Wickelschicht (5).

2. Rohr (1) nach Anspruch 1, bei dem die Wickelschicht (5) in einem in radialer Richtung außen liegenden Außenbereich (6) des Rohrs (1) angeordnet ist, insbesondere als Außenschicht.

3. Rohr (1) nach einem der vorhergehenden Ansprüche, bei dem die Wickelschicht (5) aus Harz (7) und Fasern, insbesondere Glasfasern, vorzugsweise Langfasern, gebildet ist, wobei die Fasern vorzugsweise aus einem Matten- oder Gelegeverbund bestehen.

4. Rohr (1) nach einem der vorhergehenden Ansprüche, bei dem die Fasern aus mehreren, insbesondere genau zwei, geordneten Gruppen (20, 20', 20", 21, 21', 21'') mit jeweils im Wesentlichen parallel zueinander ausgerichteten Fasern gebildet sind.

5. Rohr (1) nach Anspruch 4, bei dem die Fasern jeder Gruppe (20, 20', 20", 21, 21', 21'') zur Umfangsrichtung U des Rohres (1) definiert ausgerichtet verlaufen.

6. Rohr (1) nach einem der Ansprüche 4 oder 5, bei dem die Fasern der Gruppen (20, 20', 20 ", 21, 21', 21'') in einem definierten Winkel zueinander angeordnet sind.

7. Rohr (1) nach einem der Ansprüche 4 bis 6, bei dem die Fasern einer ersten Gruppe (20, 20', 20") näherungsweise, insbesondere genau, in Umfangsrichtung U des Rohres (1) verlaufen und die Fasern einer zweiten Gruppe (21, 21', 21'') quer, insbesondere in einem Winkel von 80° bis 100°, vorzugsweise in einem Winkel von 85° bis 95°, zu den Fasern der ersten Gruppe (20, 20', 20") verlaufen.

8. Rohr (1) nach einem der Ansprüche 4 bis 6, bei dem die Fasern einer ersten Gruppe (20, 20', 20'') in einem Winkel von 40° bis 60° zur Umfangsrichtung U des Rohres (1) verlaufen und die Fasern einer zweiten Gruppe (21, 21', 21'') quer, insbesondere in einem Winkel von 80° bis 100°, vorzugsweise in einem Winkel von 85° bis 95°, zu den Fasern der ersten Gruppe (20, 20', 20") verlaufen.

9. Rohr (1) nach einem der vorhergehenden Ansprüche, bei dem Schleuderschicht (8) und Wickelschicht (5), insbesondere durch in der Schleuderschicht (8) und der Wickelschicht (5) enthaltenes Harz (7, 12, 17), verbunden, vorzugsweise vernetzt, sind.

10. Rohr (1) nach einem der vorhergehenden Ansprüche, bei dem die Schleuderschicht (5) mindestens eine Schutzschicht (9, 14), insbesondere aus in axialer Richtung verlaufenden Fasern, vorzugsweise Kurzfasern (10) mit einer Maximallänge von 60 mm, umfasst, wobei die Schutzschicht (9, 14) vorzugsweise außen und/oder innen in Radialrichtung des Rohres (1) angeordnet ist.

11. Rohr (1) nach Anspruch 10, bei dem die Schleuderschicht (8) mindestens eine, insbesondere unverstärkte, vorzugsweise faserfreie, Zwischenschicht (11) umfasst, wobei die Zwischenschicht (11) benachbart zu mindestens einer Schutzschicht (9, 14), vorzugsweise zwischen zwei Schutzschichten (9, 14), angeordnet ist.

12. Rohr (1) nach einem der vorhergehenden Ansprüche, bei dem die Schleuderschicht (8) eine in Radialrichtung des Rohres (1) innen liegende Linerschicht (15) aufweist.

13. Verfahren zur Herstellung eines faserverstärkten Kunststoffrohres (1) gemäß einem der vorhergehenden Ansprüche mit folgenden Schritten:
a) Bildung einer Wickelschicht (5) im Wickelverfahren und
b) Bildung einer Schleuderschicht (8) im Schleuder- und/oder Schleudergussverfahren.

14. Verfahren zur Herstellung eines Rohrs nach Anspruch 13, bei dem Schritt a) das Einbringen von Fasern in einen Zylinder sowie das Tränken der Fasern mit Harz (7, 12, 17) umfasst.

15. Verfahren nach Anspruch 13 oder 14, bei dem Schritt b) das Aufschleudern mindestens einer, insbesondere mindestens eine Schutzschicht (9, 14) und insbesondere eine der Schutzschicht (9, 14) benachbart angeordnete Zwischenschicht (11) aufweisende, Schleuderschicht (8) auf die Wickelschicht (5), vorzugsweise vom Rohrinneren her, umfasst.
